Europäisches Patentamt

European Patent Office

Office européen des brevets

(11) Publication number: **0 248 376**
**A2**

## (12) EUROPEAN PATENT APPLICATION

(21) Application number: **87107882.0**

(22) Date of filing: **01.06.87**

(51) Int. Cl.⁴: **B29C 49/42**

(30) Priority: **02.06.86 US 869499**

(43) Date of publication of application:
**09.12.87 Bulletin 87/50**

(84) Designated Contracting States:
**DE FR GB IT**

(71) Applicant: **Cincinnati Milacron Inc.**
**(a corporation existing under the laws of**
**Ohio), 4701,Marburg Avenue**
**Cincinnati Ohio 45209(US)**

(72) Inventor: **Gibbemeyer, Joseph Franz**
**2871 Deerhaven Drive**
**Cincinnati Ohio 45244(US)**

(74) Representative: **Lewis, Samuel Hewitt et al**
**FORRESTER & BOEHMERT**
**Widenmayerstrasse 4/I**
**D-8000 München 22(DE)**

(54) **Blow moulding machine, conveyor apparatus and stuffer apparatus.**

(57) A reheat blow moulding machine has an improved article handling system which carries heated preforms (5) by a carriage assembly (9) from an oven to a roller chain conveyor (22) which moves them to a blow moulding station (14) at which the preform is blown and from which the blown product is moved to an eject station (16). The motions are linear and cyclical or periodic, drive means for intermittent motions being provided. Preforms (5) are handled in groups of four, each one being supported by its support ring (33) in a located notch (70) on the carriage assembly (9) and by the finish groove (34) in a holder notch (154, 155) above the support when it is transferred to the conveyor (22). All notches are open on the side facing the oven and have self-centering features to get and keep alignment for transfer and postioning at the blow mould (188). The carriage assembly which moves preforms horizontally toward the conveyor and raised them to the elevation for transfer to the holder notches (154, 155) of the conveyor.

FIG-2

## "Blow moulding machine, conveyor apparatus and stuffer apparatus"

The present invention relates to an improvement in plastic blow moulding apparatus. One aspect is a conveyor system for handling an elongated article, or plurality thereof, that depend from a part of the system. One aspect is an improvement in a preform handling system for a reheat blow moulding apparatus to move one or more injection moulded plastic resin preforms from an oven to a blow mould and to remove the blown product from the blow mould in connection with which the invention will be described without intending to be limited thereto.

Blow moulding is used in the art of manufacturing hollow articles such as bottles and jars from various plastics and resins such as polyethylene, ployvinyl chloride, polyacrylonitrile, polyethylene terephthalate and the like.

In reheat blow moulding, the plastic is first injection moulded to make a preform. Later on, in a separate operation, the preform is reheated to a suitable temperature and is then blown into a product. The temperature is selected to provide biaxial orientation of the end product, commonly a soft drink bottle. Where the end product is to be, for example, a bottle with a threaded neck, the injection moulding yields the advantages of reducing thermal memory problems and providing a threaded neck will not change significantly in shape or dimension during further processing.

The present invention is adapted to handle an article for blow moulding in the form of an injection moulded hollow preform of such resin which in turn is shaped like a test tube that has external threads about its open end or finish. The body of the preform has been heated to an orienting temperature but the threaded end (finish) has been kept cool, unheated because such end is not to be blow. Typically, such a preform has a tamperproof ring at the bottom of the threads and a stacking ring (sometimes called capping ring) underneath the tamperproof ring: the axial space between these rings typically defines a groove and is preferably the portion of the preform engaged by the conveyor of the present invention.

Blow moulding apparatus of the sort to which the present invention is preferably applied and of which it is an improvement is the Cincinnati Milacron RHB-V heat blow moulding machine which has been in use for well over a decade. Such machine (or components) is described in a number of United States patents, among them 3,958,685; 4,082,175; (both teaching couplings, conveyors suitable for ovens and ovens) and 4,185,812 (blow moulding pallet for use at a blow mould work station) which are expressly incorporated by reference herein.

The system of the present invention, while generally applicable to article handling, is preferably adapted to blow moulding and most preferably is intended to replace the pallet assembly described in '812 and also to provide as a component an improved novel means to transfer thereinto heated preforms from a reheat oven or other source (e.g. like '685 or '175)

According to this invention there is provided conveyor apparatus for conveying a plurality of preforms from a preform transfer station through a blow station where each preform is received in a blow mould and converted to an expanded hollow product therein, and then to an eject station where such a product is ejected, the apparatus comprising a pair of roller chain sprockets one being a drive sprocket, disposed on vertical shaft axes; a roller chain disposed in a horizontal plane with its pins vertical and about said sprockets; a plurality of groups of preform holder assemblies arranged in succession on said chain, the preform holder assemblies in each group being spaced the same as the blow moulds are spaced so the preforms may be presented aligned with respective blow moulds; and an intermittent drive means to rotate the drive sprocket periodically an amount sufficient to move the chain an amount to remove an entire group of holder assemblies with products from said blow moulds to the eject station and to replace same with the next succeeding group of holder assemblies.

Preferably each holder assembly comprises a resilient member with an inner end and an outer end supported at its inner end from the bottom pin link plate of said chain with the outer end extending outboard of the chain pitch line;and a holder device on the resilient member out end having a notch therein to receive and snugly fit the preform groove, such notch being located to dispose the preform in alignment with its respective blow mould; and guide means for urging each preform into its holder notch thereby to acquire and keep predetermined location.

Advantageously said sprockets are of equal size, spaced apart with straight horizontal runs of chain therebetween, located so that said stations are disposed outboard of the pitch line along that straight run which is in tension when driven and with the eject station closest to the drive sprocket, and the preform assemblies in each group being equally spaced by the amount their respective blow moulds are spaced but corresponding ones in successive groups are spaced by the different and greater amount said chain is periodically moved.

Preferably said holder assemblies when at said blow station are each disposed to support a preform when pushed by said guide means fully into said holder notch on the vertical centre of its blow mould with the bottom of its support ring clear of the blow mould top surface, and said resilient member being able to flex vertically enough to permit said capping ring bottom to engage the mould top surface to form a face seal.

Preferably the apparatus further comprises a chain support means for providing vertical and horizontal chain alignment along the straight runs of the chain.

Advantageously said chain support means comprises first and second pairs of rail carrier guides each pair disposed opposing the other with one of said chain straight runs in between a carrier guide track on each of said guides and likewise disposed;and said chain having a plurality of carrier guides disposed therealong with each extending inboard or outboard of the chain to engage its respective carrier track.

Preferably each holder assembly further comprises a lug extending horizontally from a selected bottom pin link plate, said resilient member being fastened at its inner end underneath and to said carrier guide and by a distance to clear said chain carrier guides; the carrier guide of low friction material and being secured to the lug and having opposed linear bearings extending into sliding engagement with one of said guide tracks; a pair of extended pins protruding downwardly through said guide out of the pin holes in the aforesaid bottom pin link plate; and a preform holder supported on the outer end of said resilient member and having on its outer edge a notch as aforesaid.

According to this invention there is also provided a blow moulding machine comprising a conveyor apparatus to move a heated preform of circular section from an oven to a blow mould where it is blown into a hollow product using a stuffer assembly and to convey such product to an eject station wherein the preform has an unblown finish with a capping ring from which depends a hollow tubular body that is blown to form the product and a groove immediately above said capping ring, the remainder of the finish being above said groove, the machine comprising: an oven which discharges downwardly a preform heated preparatory to being blown; a preform transfer station, a blow mould station, a blow mould at said blow station, and a product eject station disposed linearly along one side of said blow station; a reach and take carriage means for receiving the preform downwardly discharged from the oven and moving same to said preform transfer station; an endless roller conveyor chain disposed about sprockets in a horizontal plane with the pins vertical and with a straight run extending along one side of said blow mould station; a plurality of outward facing preform holder means at a predetermined interval from each other along said chain such that a holder means is at each of said stations at the same time; each holder means having a resilient cantilever member attached to said chain and vertically flexible, a preform holder notch at the outer end of the resilient member and open on the side remote from the chain and shaped to snugly engage said preform groove, the notch being located relative to the chain and its movement along said run so as to align with the blow mould at the blow station; said carriage means having an upper plate, a capping ring notch in said plate for locating the preforms by its capping ring, an inner plate movably supported underneath said upper plate, a body notch in said inner plate sized smaller than said capping ring notch and to receive a preform body, said capping ring notch and body notch defining a recess with a support surface surrounding said body notch the open side of the notches facing in the same direction as an aligned with said preform holder notch, said carriage means presenting said plates at said transfer station at an elevation such that said groove is engagable by said preform holder notch; and drive means to move said carriage means from said oven station to just past where the notches are substantially vertically aligned; whereby the groove is engaged by said preform holder notch and the depending preform body is not within said upper plate capping ring notch and said preform is transferred from the oven to the conveyor aligned for movement to the blow mould.

Preferably in said machine

(a) all said notches are of U-shape;

(b) preform locating means for said upper plate includes an upwardly bent edge of the plate;

(c) means is provided to move said inner plate notch underneath said upper plate hence pushing the preform away from its support;

(d) a periodic drive means is provided to intermittently advance said chain from said transfer station into said blow mould at blow stations; and

(e) a periodic drive means is provided intermittently to advance said chain from said transfer station into said blow mould at said blow station, the distance between holders being the amount said chain is advanced.

According to this invention there is also provided a conveyor apparatus for transferring a plurality of vertically depending parts each such part being of generally cylindrical shape and near its uppermost end having a support ring with superjacent handling notch or groove from a receiving station to a transfer station at a different elevation and clearing itself of any parts accidentally retained when moving between said transfer station and said receiving station and comprising: a horizontal carriage assembly for moving generally horizontally back and forth between said stations; a vertical carriage assembly supported on said horizontal carriage assembly for moving vertically sufficiently to elevate a plurality of said parts from a first level at said receiving station where it receives said parts to a second level of said transfer station where said parts are removed in timed relation to horizontal motion between said respective stations; a support plate assembly mounted at the upper end of said vertical carriage assembly and having a trailing edge; a plurality of forward facing notches in said trailing edge each being shaped and sized to admit the part depending portion beneath said ring but not said ring itself; locating means disposed about each said notch to receive, support and locate said capping ring.

Preferably the machine further comprises horizontal power means drivingly connected to said horizontal carriage assembly to move said horizontal carriage assembly back and forth between said two stations, and preferably also vertical power means mounted on one of said carriage means to move said outer plate to said first level by the time said notches are aligned underneath parts to be received at said receiving station and to said second level before the time the handling grooves are engaged by a separate apparatus at said transfer station.

Advantageously the horizontal power means is drivingly connected to said horizontal carriage assembly to move said horizontal carriage assembly back and forth between the two said stations, and the vertical power means is mounted on one of said carriage means to move said outer plate to said first level by the time said notches are aligned underneath parts to be received at said receiving station and to said second level before the time the parts handling grooves are aligned by a separate apparatus at said emptying station.

Advantageously the machine comprises a fail-safe means mounted on one of said carriage means for removing accidentally retained parts from said support plate assembly before said plate assembly is positioned at said receiving station, and advantageously deactivating means to prevent operation of said fail-safe means when parts are supposed to be supported in said notches.

The fail-safe means may comprise a cam and a follower engagable therewith respectively mounted on one of said vertical carriage means and said base, said deactivating means including second power means to lift said vertical carriage means sufficiently to prevent operative contact between said cam and follower.

If desired said fail-safe means may further include an inner plate and an outer plate, said inner plate being movably supported underneath said outer plate, and a lever actuating system mounted on said vertical carriage assembly and connected between said follower and said inner plate, said cam being mounted on said conveyor frame.

According to this invention there is also provided conveyor apparatus for conveying an elongate product with its longitudinal axis vertical, comprising an ejector means for removing the product from the conveyor apparatus in a manner to ensure that the product falls substantially in a vertical orientation, the conveyor apparatus comprising a frame, a holder having a U-shaped recess on one side of the holder in which said product is suspended near its upper end, the open side of the recess being sized to allow the product to pass out, characterised in that the ejector means comprises an eject member located underneath said holder and horizontally disposed with said product between itself and the open side of said notch; three vertically extending guide members, two of which are secured to one of the frame and the eject member and the other guide being mounted on the other side of the product on the other one of said frame and eject member; power means to reciprocate said eject member normally of said conveyor a distance such that the product is pushed horizontally out of the open side of the notch an amount to free it from said holder; and said guide members assuming a guiding engagement with the product by the time the product is moved free of said holder.

Preferably the ejector means of the apparatus comprises a fluid cylinder, advantageously a double acting air cylinder.

Advantageously said two guide means are mounted on said ejector bar, and the said one guide means is mounted on the frame.

Advantageously at least one of said guide members has a low friction coating on that portion to be engaged by said product.

According to this invention there is also provided a stuffer apparatus for use in the blow moulding of a plastic bottle within a blow mould from a plastic preform, the apparatus comprising: a stuffer cylinder having a hollow plunger with a first bore extending completely therethrough; a stuffer nose secured on the end of said hollow plunger, having a nose sealing structure for establishing an air tight seal with the finish of the preform, and having a nose bore extending coaxially from said first bore to and through said sealing structure; a long stroke centre rod cylinder mounted vertically above and coaxial with said stuffer cylinder, having a centering plunger having a stroke large enough to move into engagement with the bottom of an object being blown when at the blow mould bottom; and blow air passage means in said nose for conveying blow air through the nose to an exit into the workpiece at said nose sealing structure.

Preferably the said air passage of the stuffer apparatus includes an enlarged end part at the end of the nose bore surrounding said centering plunger, which part is located to exit into the object being blown, and desirably air seal means is provided to afford a sliding seal against air leaks between said centering plunger and at least one of said bores.

Advantageously said nose sealing structure comprises a face seal which achieves an air tight seal by compression against the workpiece.

According to this invention there is also provided an improved stuffer apparatus for use in blow moulding a plastic bottle within a blow mould from a plastic preform and comprising a stuffer cylinder having a hollow plunger with a first bore extending therethrough, a stuffer nose secured on the end of said hollow plunger, having a nose sealing structure for establishing an air tight seal with the finish of the preform, and having a nose bore extending co-axially from said first bore to and through said sealing structure, and blow air passage means in said nose for conveying blow air through the nose to an exit into the workpiece at said nose sealing structure.

According to this invention there is also provided stuffer apparatus for a blow moulding machine comprising: a plurality of double acting long stroke fluid cylinders which in use will be supported on an uppermost part of the machine each with its plunger substantially vertical and coaxial with the axis of the workpiece to be blown; a corresponding plurality of double acting short stroke stuffer cylinders each being supported and located below a corresponding one of said long stroke cylinders for a vertical stroke, each having a hollow plunger with a centre rod bore extending completely therethrough and which receives a corresponding one of said plungers in the hollow portion thereof; a stuffer nose on the lower end of each of said plungers with a generally central bore aligned with its corresponding centre rod bore; a seal surface on the lower end of said stuffer nose for sealing engaging a preform during blowing, said stuffer nose bore passing through said seal surface for communication with the interior of the preform; said stuffer nose bore having an enlarged lower end; an inlet air passage through an intermediate part of said stuffer nose into said enlarged bore lower end; said plunger extending in telescoping manner through said stuffer cylinder and its centre rod bore and through said stuffer nose and its central bore and the enlarged lower end having a stroke sufficient to move is lower end to the bottom of a workpiece when in the blow mould; and a seal between the plunger and said central bore above said inlet air passage.

According to this invention there is also provided a conveyor apparatus for conveying a plurality of blow moulding preforms, each of which is engaged at a groove between capping and support rings on the upper end, from a preform receiving or loading station to a transfer station and thence through at least one additional work station, the apparatus comprising a reach and take assembly having: a carriage assembly mounted for motion on a first path; power means to move said carriage assembly back and forth along said first path between said loading station and said transfer station; a support assembly having a first support plate and a second support plate said first plate having a trailing edge that extends laterally of said path at the upper side of said carriage assembly said second plate being movably supported underneath said first plate to reciprocate in said first path direction; support recesses in the trailing edge of the first plate which correspond in number to the quantity of preforms to be transferred in one cycle of operation and shaped to snugly receive and locate said support ring, and smaller corresponding recesses in said second plate to provide support to the preform body underneath said preform support ring.

According to this invention there is also provided a conveyor apparatus for conveying at least one workpiece each of which is engaged at an indentation between upper and lower flanges or the like on the upper end portion from a workpiece receiving or loading station to a transfer station and thence through at least one additional work station comprising a reach and take assembly having a carriage assembly mounted for motion on a first path; power means to move said carriage assembly means back and forth along said first path between said loading station and said transfer station; a support assembly comprising a first fixed plate and a second movable plate underneath said first plate, the first plate having a trailing edge which extends laterally of said path at the upper side of said carriage assembly and a support recess in the trailing edge of the first plate which is shaped to snugly receive and conform to the lower flange of the workpiece and a corresponding smaller support recess in said second plate that provide a shoulder around the bottom of the recess of the first plate to support said lower flange from underneath; and a transport mechanism comprising an endless conveyor member; drive and idler means supporting said conveyor member and providing a second path of movement including a linear run in tension when driven between said transfer station and the work station downstream therefrom; an indexing drive means to periodically move said drive means hence said conveyor member a predetermined amount on each cycle and holder means supported outwardly from said endless conveyor member and presenting a recess aligned with the recess of the carriage assembly but superjacent thereto by an amount sufficient to receive the workpiece when said carriage assembly is moved beneath the transport mechanism by said power means.

There will now be given a detailed description, to be read with reference to the accompanying drawings, of a blow moulding machine which has been selected for the purpose of illustrating the invention by way of example, the blow moulding machine comprising a conveyor apparatus and a stuffer apparatus which are also illustrative of certain aspects of this invention.

In the accompanying drawings:

FIGURE 1 is a partially cutaway front elevation of the blow moulding machine equipped with the invention and generally depicting the oven discharge and blow moulding portion of the machine;

FIGURE 2 is a side elevation as from 2-2 of Figure 1;

FIGURES 3 and 4 are enlarged side elevation views showing successive positions of the carriage assembly (reach and take assembly) outer or top plate, preform, and oven coupling during reception at the oven discharge;

FIGURE 5 is a top section 5-5 of Figure 4;

FIGURE 6 is a section on 6-6 of Figure 4;

FIGURES 7 and 8 are side elevation views on section 7-7 of Figure 1 carrier assembly at the transfer station at the time of preform transfer into the blow mould conveyor and immediately after, respectively, depicting a mechanical fail-safe (abort) system in respective deactivated and the activated positions;

FIGURE 9 is an enlarged view of a part of Figure 7 showing relationship at the transfer station of preform, outer plate of the carrier, and holder assembly;

FIGURE 10 is an exploded isometric view of a section of the conveyor roller chain, holder, and guides;

FIGURE 11 is a side elevation of the carriage assembly of Figures 7 and 8 showing how a cam operates the fail-safe system during the return-to-oven movement;

FIGURES 12 and 13 are enlarged views of the Figure 11 fail-safe clearance plate, or inner plate, in different positions relative to the carriage outer plate;

FIGURE 14 is a partly cutaway top view of the carriage of Figures 3, 4 and 11-13 as seen on section 14-14 of Figure 1;

FIGURE 15 is a rear elevation partial section view of the carriage assembly along 15-15 of Figure 2 showing the vertical carriage drive means and other features;

FIGURE 16 is a partial section side elevation along 16-16 of Figure 1 showing the telescoping relation of the stuffer and centre rods and alignment therewith of holder assembly, preforms, and blow mould;

FIGURES 17 and 18 are enlarged views of parts of Figure 16 emphasising the face seal flexing of the holder into a sealing position respectively, and Figure 18 also shows the snug fit between the holder and groove;

FIGURES 19 and 20 show the ejector work station along 19-19 of Figure 1 before and after ejection from the holder;

FIGURE 21 is a section along 21-21 of Figure 20;

FIGURE 22 is a top plan view of the roller chain along 22-22 of Figure 1 depicting, inter alia, the guide blocks straddling the lanes at the carriage-conveyor transfer station; and

FIGURES 23 and 24 illustrate a preferred fail-safe system, are respective rear and side views comparable to Figures 15, 9 omit some parts for clarity, and show optional features omitted for clarity from other Figures, Figure 24 being a section along 24-24 of Figure 23.

Throughout the following description the same reference numbers are used to refer to same parts. As already stated above, the description is made by the way of reference to the preferred application of the present invention to handling a preform in an RHB-V blow moulding system, it being understood that other applications of similar shaped articles are within the spirit of this present invention. The present invention also is described and illustrated for the handling of four articles at a time, it being understood that a different quantity can be handled simultaneously and that the description usually refers to the handling of only one for the sake of simplicity, not by way of limitation.

The purpose of the blow moulding conveyor apparatus 1 of the present invention is to receive a preform 5 when ejected from an oven 7 in which it has been heated and to transport it through a series of operations which include blow moulding it into a bottle in a blow moulding machine 6 and ejecting it from the machine. To do this, a preform 5 is ejected from the oven 7 vertically downwardly into a carriage assembly (reach and take means) 9. The carriage assembly means 9 moves the preform to where it is engaged by a transport mechanism 10 at a transfer station 12. The transport mechanism 10 has three work stations through which it moves the preform: the aforementioned transfer station 12, a blow moulding station 14 where the preform 5 is blow moulded into a product 15, normally a bottle, and an eject station 16 where the product is removed from the machine environment.

The transport mechanism 10 preferably each comprises an endless conveyor member 18 having a plurality of holder assemblies 20 comprising a plurality of holder devices 150 protruding therefrom. The preform 5 is transferred from the carriage assembly 9 at the transfer station 12 into one of the holders 20 and stays engaged therein from the station through the blow moulding and eject operations and stations.

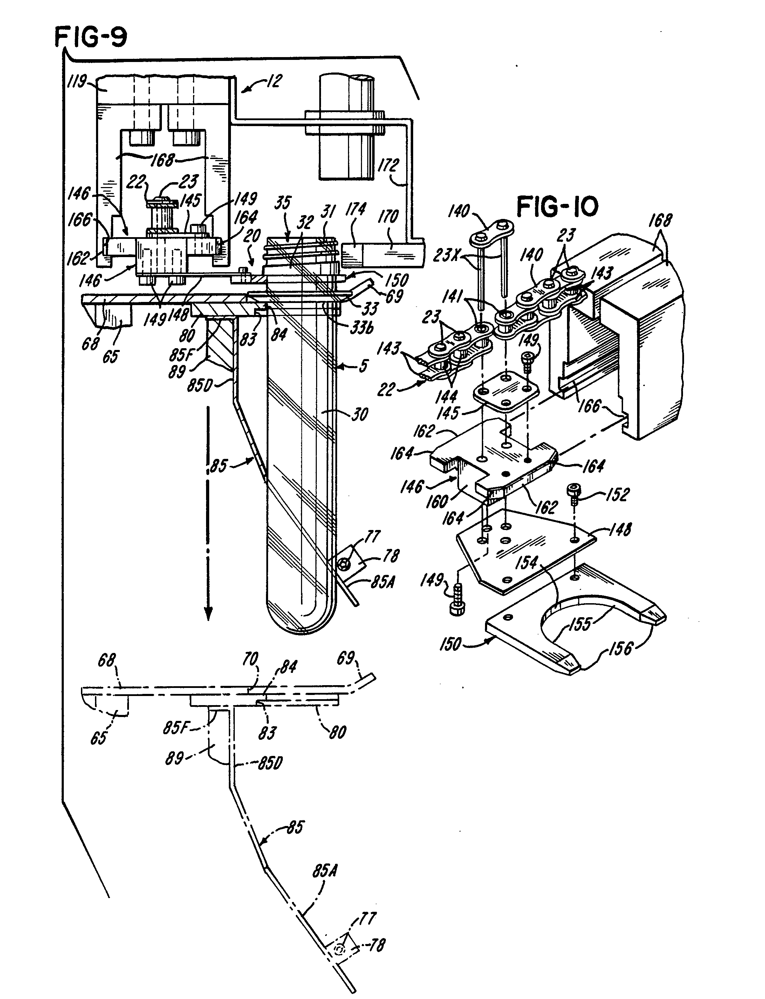

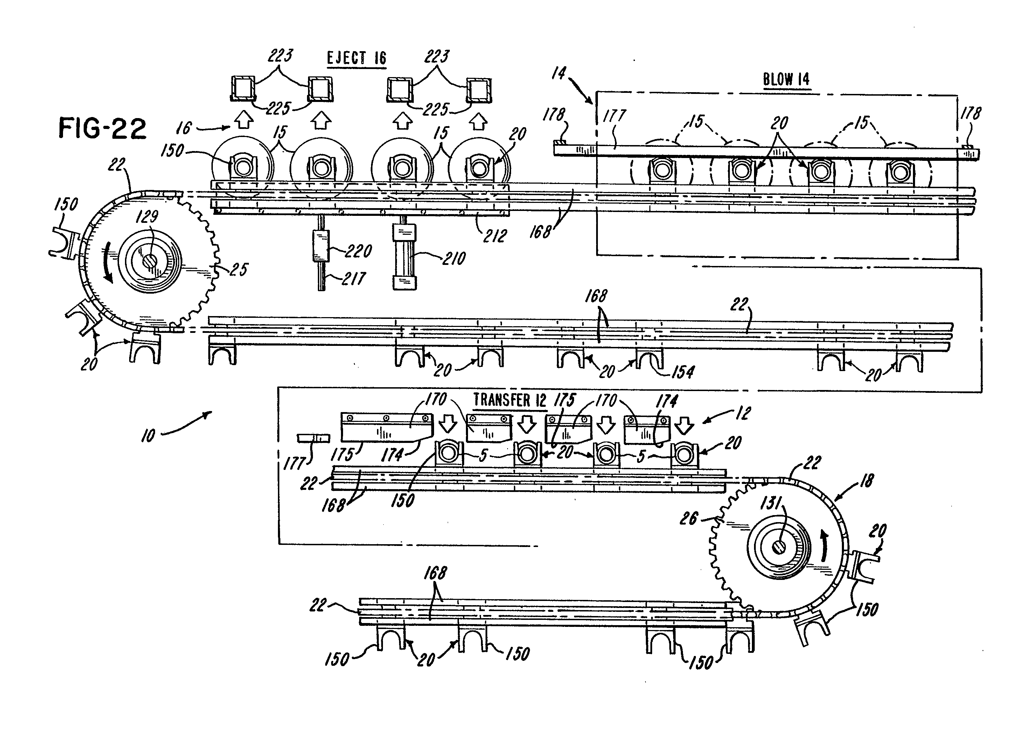

Preferably, the endless conveyor member 18 which interacts with carriage assembly 9 comprises a roller chain 22 disposed with its pins 23 (Figure 10) vertical and around sprockets 25, 26 (Figure 22) which turn about vertical axes.

The invention also includes an improved stuffer assembly 16 for use at the blow station featuring telescoping centre and stuffer rods or plungers 28, 29 and a face seal structure for interacting with the preform and the blow mould to achieve moulding. Further, the apparatus includes ejection apparatus which ejects the preform along a vertical axis, thereby providing a predetermined position as well as location below the apparatus where it may be received and taken away by means not part of the instant invention.

Preform 5 (Figure 2) is of injection moulded thermoplastic biaxially orientable material which will so orient upon being blown in a mould under certain conditions, including preform temperature. For example, polyethylene terephthalate orients in the range from about 200°F to 250°F. Each preform 5 has a hollow body 30 of circular cross-section, shaped like a test tube with an externally threaded lip 31 above a pilfer proof ring 32 which is above a support ring 33, the ring having an annular portion providing a flat bottom 33b. The space between the two rings 32, 33 provides an annular groove 34 by which the holder 20 engages the preform.

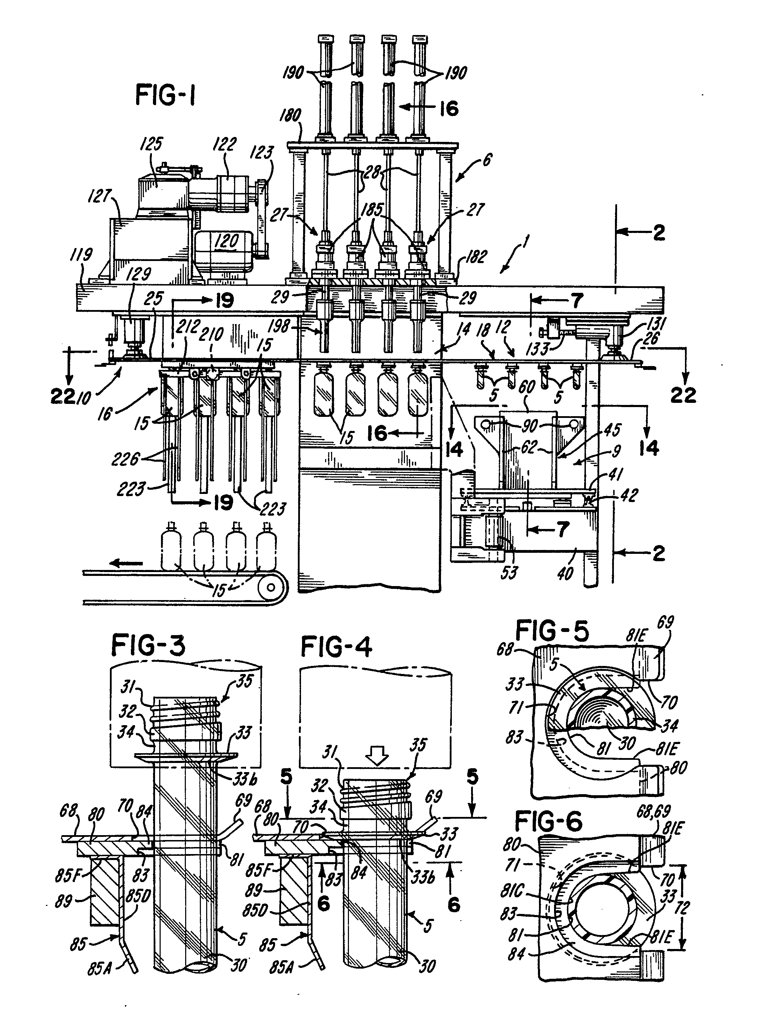

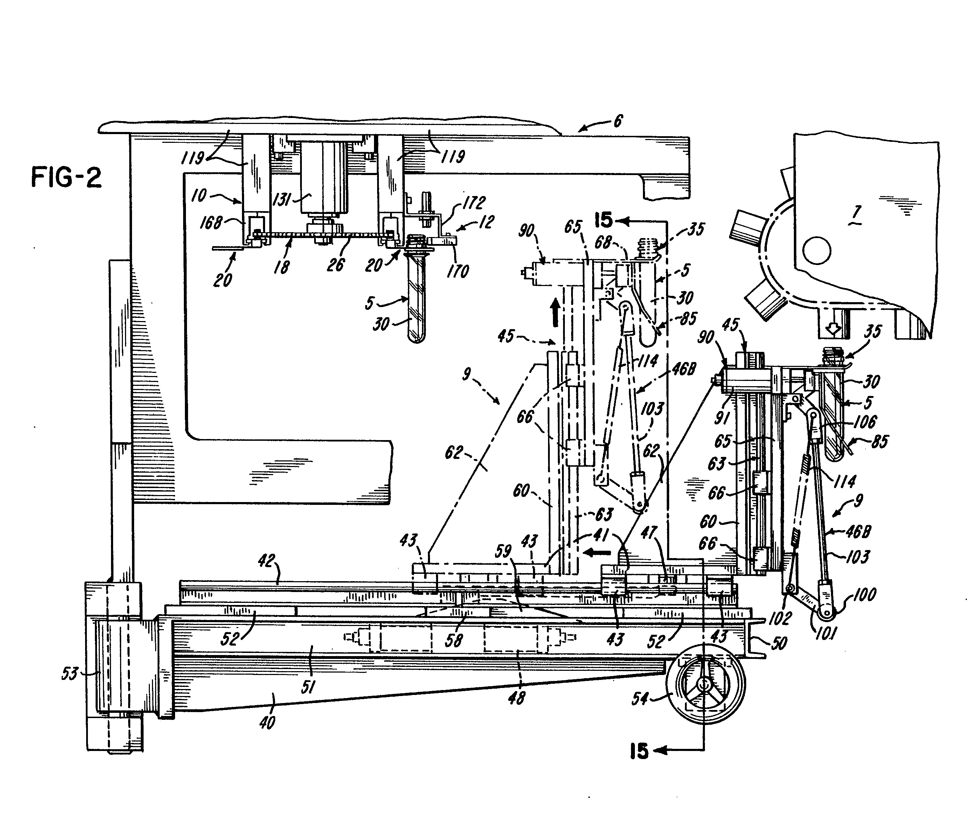

The preform 5 is not blow moulded in the region of threads, groove and rings (collectively called the finish 35) and hence is not heated in such region by the oven. For this reason the preform is handled (e.g. Figure 2) and engaged (Figure 6) by its finish 35 until the blow moulding has been accomplished.

The biaxially orientable material is commonly and preferably polyethylene terephthalate in amorphous form but may also comprise other biaxially orientable resin. Preform structure, materials, etc. are described generally in the above mentioned U.S. Patents and elsewhere to all of which the reader is referred for additional preform information.

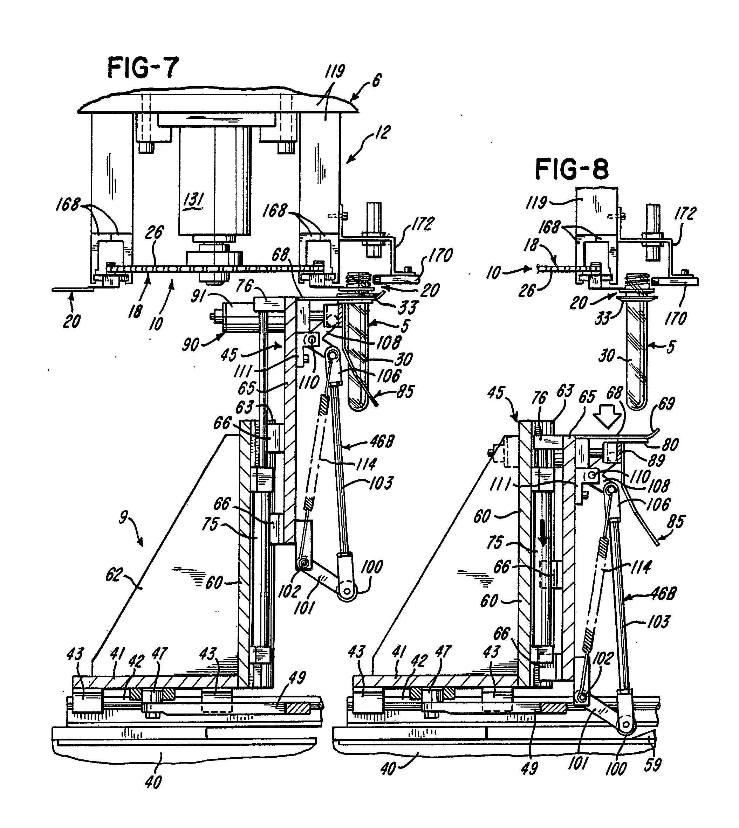

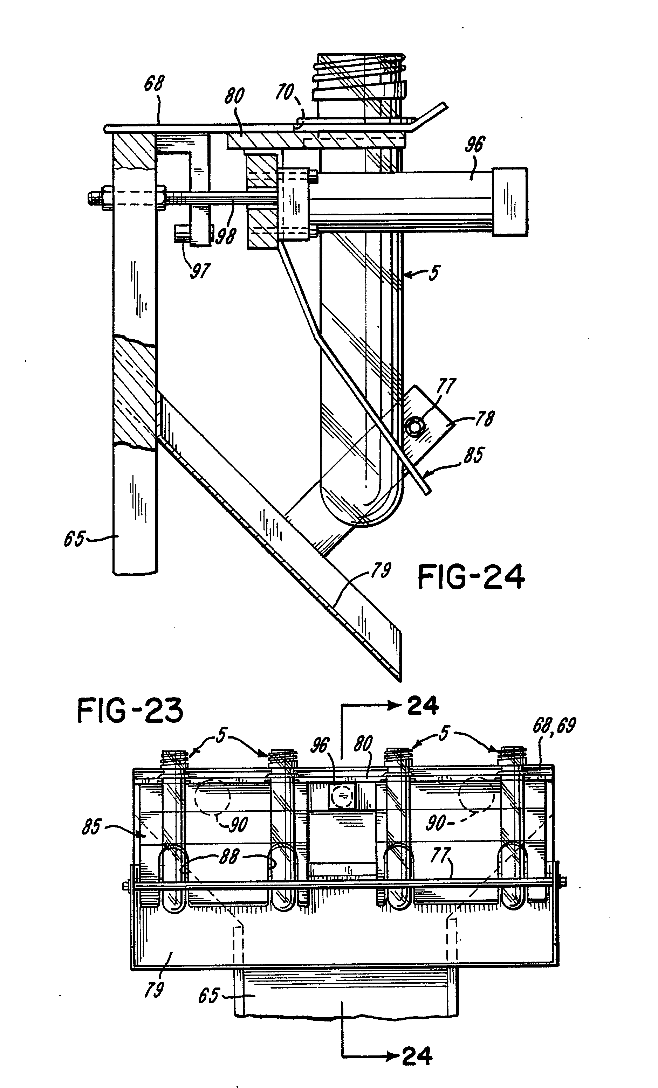

The carriage assembly 9 comprises a horizontal carriage base 41 supported on guide rails 42 of frame 40 by means of linear bearings 43 to move back and forth between the oven 7 and the transfer station 12 of the conveyor system. A vertical carriage assembly 45 is mounted on carriage base 41 and is constructed to move at proper times from a low preform-receiving elevation (Figures 2, 8) underneath the oven 7 to a greater elevation (Figure 7) where the preform is at the correct height for receipt and engagement by the conveyor system 10 at the transfer station 12. There is also an abort or fail-safe means 46 (46B in Figures 1-15; 46A in Figures 23, 24) associated with the vertical assembly carriage 45 to ensure that no preform remains in the carriage assembly 9 at the time it is moved underneath the oven.

A rotary actuator 48 is secured to the frame 40 underneath carriage base 41 which it engages by scotch yoke 49 to cause the back and forth, or reach-and-take motion of the overall carriage assembly. The scotch yoke 49 includes two spaced apart rails secured underneath the base 41 and within the resulting groove moves a pin or preferably cam follower 47 (Figures 7, 8) on the actuator crank arm. The rotary actuator is preferably a hydraulic cylinder designed to provide 180° of crank operation and then to reset.

As should be appreciated from the drawings, the subject apparatus is designed to handle four preforms 5 at a time, that being the quantity received simultaneously from the oven 7. However, since their handling is identical in each lane, the description is given for one preform only, it being understood that the system is capable of conveying a plurality of them from the time they are received from oven 7 to the time they are ejected from the conveyor apparatus at the eject station 16.

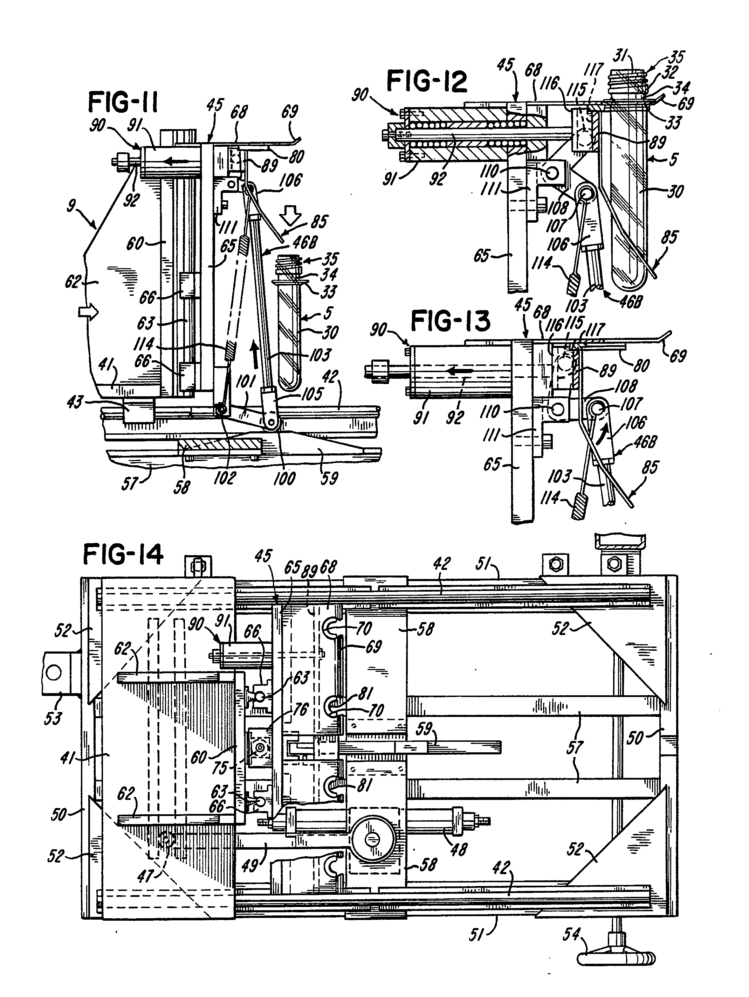

The frame 40 (see Figures 2, 14) is preferably an assembly and includes channel end pieces 50 and 1-beam side sills 51 arranged in a rectangle with gussets 52 on the corners, a mounting hinge 53 securing one end of same to the base of the blow moulding machine and a hand wheel 54 operated lock on the opposite base end to secure as by threads to the blow moulding machine. Centre sill channels 57 and slats 58 provide central stiffness and a recess in which is secured cam 59 of the fail-safe system.

A vertical cylinder mounting plate 60 is secured at right angles to base 41 and reinforced in that position by gussets 62: these elements, bearings 42 and vertical guides 63 (secured to plate 60) are all included in the horizontal carriage assembly which in turn supports the vertical carriage assembly 45.

The vertical carriage assembly 45 includes a vertical carriage base 65 on which is mounted linear ball bushing bearings 66 which are guided vertically by guides 63. An outer support plate 68 is fixedly secured to the uppermost end of base 65 and has a locating means on the plate trailing edge consisting of the bent upwardly trailing portion 69 (see Figures 3-6). Support notches 70 are cut in the upper plate trailing edge and, as seen from above (Figures 5, 14) are shaped like the Greek capital letter Omega (Ω) to define, in the horseshoe or U-portion, a circular sector 71 recess just slightly larger in diameter than (about 0.030 inches to 0.050 inches (.76 mm to 1.3 mm) preferably 0.040 inches (1 mm)) the diameter of preform support ring 33. The legs of the Omega (Ω) (which terminate in locator or trailing portion 69) are spaced apart sufficiently to allow the preform body 30 readily to pass between them (about 1/16 inch (1.6 mm) to 1/8 inch (3.2 mm) more than the diameter of body 30 and in Figure 6 designated distance 72).

A vertical power means preferably comprising a double acting air cylinder assembly (or more broadly, fluid cylinder) 75 is secured to the mounting plate 60 and its plunger or piston rod is drivingly connected to the vertical carriage assembly 45, preferably as shown to base 65 by tab 76 (Figures 7, 8). The cylinder assembly 75 operates to push the vertical assembly 45 from the lower position at the oven (solid lines Figures 2, 8) up to the level at which the annular groove 34 is aligned with the holder device 150 (dotted Figure 2, solid Figure 7) for transfer at station 12, respectively.

Preferably a fly bar 77 is held by and between brackets 78 which are secured to the edges of tray 79 that in turn is secured to the vertical base 65, as is shown in Figures 23 and 24. The tray guides any preforms accidentally hung up when they drop to a location (e.g. scrap bin underneath, not illustrated), whilst the fly bar 77 keeps the preform lower end from swinging counterclockwise (Figure 24) under inertia and may conveniently be made of tubing.

Figures 1-15 and Figures 23, 24 respectively, show mechanical fail-safe means 46B and preferred power cylinder fail-safe means 46A to assure removal of an accidentally retained preform in the vertical carriage assembly 45. Both means have a reciprocable inner plate 80 (Figures 3-6) mounted immediately underneath and in sliding engagement with the outer plate 69. This inner plate supports the preform by engaging the underside of the support ring 33 and is withdrawn from underneath preform support ring (see Figures 12, 13) to remove such support and is likewise withdrawn to assist in removing an accidentally retained workpiece. U-shaped notches 81 are provided in the trailing edge of the plate 80 and preferably as depicted (Figures 5, 6) are shaped to include a semi-circular end 81C with two parallel legs 81E (Figure 6) each tangent to the ends of the semi-circle. Semi-circle 81C has a diameter about 0.005 - 0.020 inches (0.13 mm - 0.5 mm) larger than the diameter of the preform body at that point (e.g. Figure 6). Each notch 81 has as undercut or relief 83 to minimise the area 84 in contact with the preform body 30, hence to reduce conductive heat transfer away from such body. A guide plate 85 is fixed to the plate 80 and preferably is bent out of sheet metal to have (Figure 4) a mounting flange 85F, vertical web 85D depending therefrom, and an apron 85A extending obliquely from the web to a location under the notches 81. The apron 85A has the notches 88 cut therein and shaped like the projection of notches 81 onto the slope or plane of the apron 85A. The plate 85 holds the preforms in the preferred exactly vertical posture and assures that preforms ejected during fail-safe fall away, among other features.

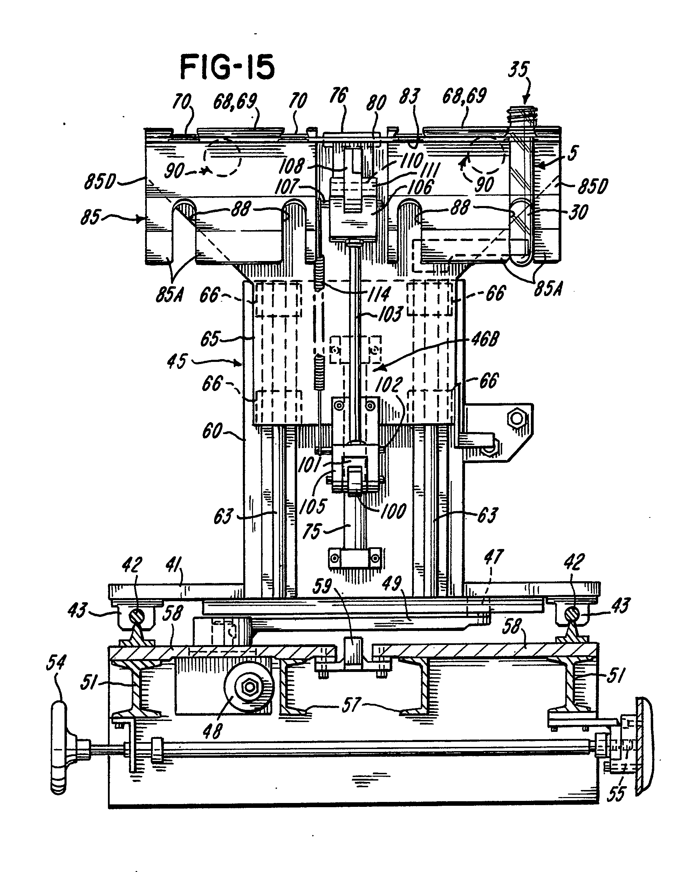

In the depicted (Figures 14, 15) presently preferred construction, two mirror image outer and inner plates 68, 80 are provided, one right hand and left version of each and spaced apart sufficiently to provide a central gap. Use of two short pieces of each facilitates manufacture or a flat part, although one long piece for each may be used. Flange 85F and web 85D of the guide plate 85 extend all the way across on cross bar 89 and support thereon both and left and right hand plates 80, thus obtaining movement as one when the actuating means operates and resets the inner plates 80.

Also, as best shown in Figures 12-15, the assembly of an inner plates 80 and guide plate 85 is movably mounted on a pair of linear ball bearings 90, the bearing cage 91 (Figure 13) of which is secured to the vertical carriage base 65 and the guide rods 92 (Figure 12) of which are secured to the 80, 85 plate assembly. A snubber or shock absorber in the form of a resilient pad or washer may be provided at each end of the guide rod between the retaining nut and the bearing end.

Mounted beneath the plate 80 is an abort cylinder 96, having its plunger 98 secured to vertical carriage base 65 by an L-shaped bracket 97, (see Figures 23 and 24) Admission of air in the left end of cylinder 96 moves the cylinder 96 to reciprocate the inner plate 80 from the normal or preform support position shown in Figure 12 to the fail-safe eject position of Figures 11 and 13.

The mechanically actuated fail-safe means 46B depicted in Figures 2, 7, 8, 11-15 has a linkage that is actuated by engaging cam 59 to move the inner plate 80 from the preform supporting position illustrated in Figures 3, 4, 12 to the eject or clearing position of Figures 11, 13 whereby an undesirably retained preform falls away as in Figure 11. The linkage is a four-bar crank mechanism mounted on the vertical carriage base 65 and has a roller type cam follower 100 supported on a crank 101 which swings about a pin or axle 102 supported from base 65. A connecting rod 103 has respective lower and upper clevises 105, 106 secured thereon (as by the illustrated, not numbered, known thread-and-locknut). The lower clevis 105 provides the pin or pivot between the crank 101 and the rod 103 and on which the roller 100 turns.

The upper clevis 106 is connected by a pin joint 107 to bell crank 108 which is revolvably mounted to turn on a pin 110 which is in turn supported from the base 65 by a bracket 111. A helical spring 114 is held in tension between the pins 102 and 107, hooks on the spring ends resting in annular grooves on the overhanging portions of the pins (Figure 15). Tension in this spring biases the crank mechanism in Figures 7 and 12, i.e. to the position of Figures 3, 4 where the inner plate 80 can support a preform from the underside of its ring 33.

The other arm of bell crank 108 is connected to the plate 80 through a scoth yoke to allow for changing centre distances. Thus, when the carriage assembly 9 is moved from the transfer station 12 to the oven discharge station, the follower 100 hits the cam 59 enroute, actuating the fail-safe means whereby the bell crank 108 moves counterclockwise as seen in Figure 12 to the Figure 13 position whereupon any undesirably retained workpiece is removed. The scotch yoke here comprises a roller cam follower 115 on the bell crank, a bracket 116 secured to the cross bar 89, and a vertical groove 117 in the bracket in which the follower 115 is received.

Indexing mechanism is provided which is operative periodically to index the transport mechanism 10 (chain 18 and holders) thereby to move a group of four preform holders successively into the transfer station 12, to the blow station 14, then to the eject station 16, and then to step the group back around to repeat same, all in synchronism with the oven eject and reach and take functions. It includes an electric motor 120 mounted on a frame 119 which drives a clutch-brake 122 through a timing belt 123 wrapped about suitable toothed pulleys. A gear reducer 125 slows down rotary speed (10:1) and feeds its output into an index unit 127 which is commercially available from several USA sources such as Ferguson Machine Company, St. Louis, Missouri and/or CAMCO (Commercial Cam Division, Emerson Electric), Wheeling, Illinois. Preferably a 90° dwell, 270° index per 360° input is used but this does depend on original motor 120 speed and overall speed reduction.

The indexing (i.e. periodical unidirectional arcuate) motion from the drive unit 127 output goes through suitable shafting 129 to the chain drive sprocket 25. Shafting 129 is preferably an assembly with a roller bearing supported shaft housed in a pillow block. The idler sprocket 26 (Figure 2) is constructed and mounted similarly on assembly 131 at the other end of the conveyor preferably with a chain tensioning means 133. Assemblies 129, 131 and tensioner 133 are mounted on the frame 119.

Transport mechanism 10 and holder 20 (Figures 1, 2, 7-9, 18 22): the transport mechanism 10 includes an endless conveyor member 18 (Figures 1, 2) preferably a roller chain 22 (Figure 10) which is wrapped in endless fashion about sprockets 25, 26 (Figure 2) and thus, along with other parts of the system, is mounted directly or indirectly on the frame 119. Note that mounting components on the frames 40, 119 permits manufacture of these items of commerce and facilitates retrofitting RHB-V blow moulding machines as well as use in other contexts in contrast to on-site assemblage.

The chain 22 is supported with its pins 23 on vertical axes and preferably is pre-stretched and is kept linear and in tension on the active side of its path so that work stations 12, 14, 16 may be along a straight line and the workpiece only has to travel linearly.

Roller chain construction is well known but for background and convenience the standard nomenclature of some Figure 10 parts is now given (using terms from Mark's Mechanical Engineers Handbook, Fifth Ed., page 925 et seq.): a pair of pin link plates 140 connect adjacent pins 23 and are disposed on the outside of the chain; about each pin is a bushing 141 which preferably extends through the roller link plate 143 on the inside of the pin links 140; a roller 144 is about each bushing and spaces the pair of roller links 143.

Each holder assembly 20 (Figure 10) is attached to the chain by using an extra-long pair of pins 23x (extended pins) secured in the usual manner to an uppermost pin link 140 and which pass through the bushings and rollers to the lowermost special pin link 145 which is oversized (that is, has an integral lug as an attachment means which extends out from the chain as illustrated in Figures 2, 10, 22) through a low friction (e.g. nylon 101) carrier guide 146 and finally through the inboard end of leaf spring 148 where a rivet head or other fastener secures all together. That is, extended pin 23x secures together the usual parts of a roller chain between a pair of pin link plates and additionally secures on the lower side carrier guide 146 and spring 148. Cap screws 149 provide supplemental fastening of the carrier guide 146 to the lug 145 and spring 148, respectively.

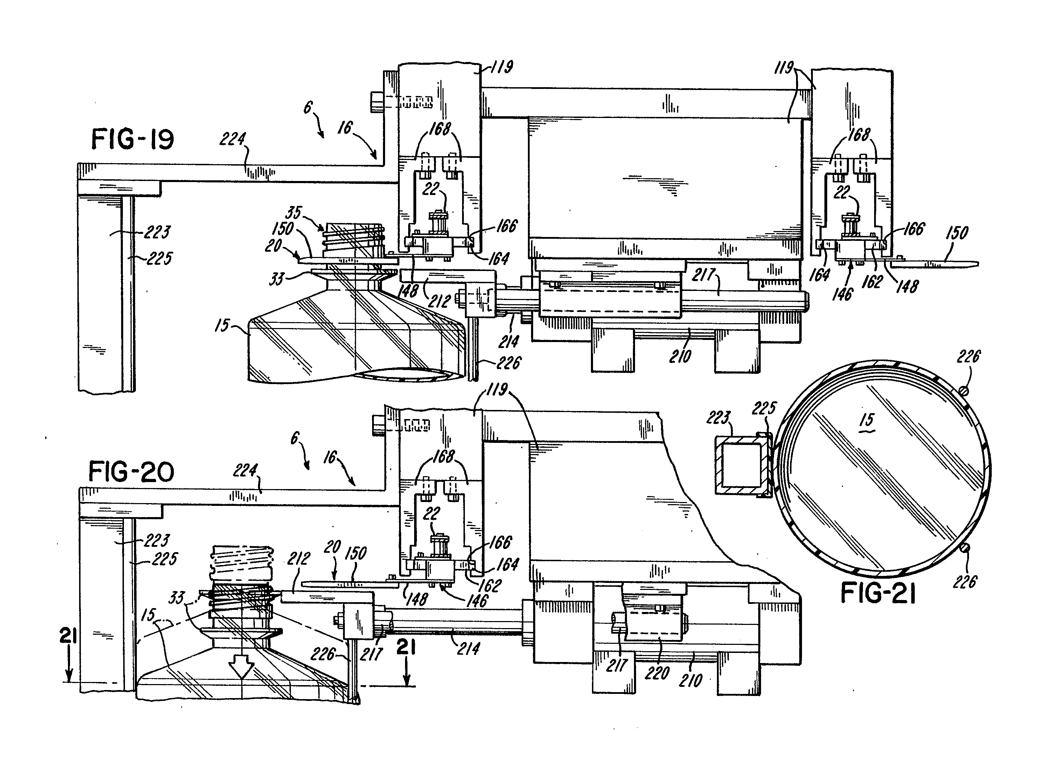

A holder device 150 completes the above holder assembly 20. Each holder device 150 is attached by a pair of screws 152 to the outer or free end of the spring 148. The holder device has a U-shaped notch 154, 155, 156 of a size and thickness (Figure 18) to snugly engage groove 35 of a preform. For example the semi-circular rear part 154 of the notch should be 0.980 inch (25 mm) diameter and a 0.147 inch (3.7mm) thickness for the standard groove 35 on a standard finish for a 28mm soft drink bottle and similarly for other sizes. The legs 155 of the notch are parallel on the inside, and of course, spaced by the aforesaid diameter. The ends 156 of the legs are tapered about 5° top and bottom.

Each preform 5 is moved in a path where the flat bottom 33B of the support ring 33 clears the top of the blow mould by about 0.005 inches. This clearance is eliminated during blowing by the spring 148 to establish seals between the bottom 33B and the blow mould and a face seal between nose and finish 35.

Each carrier guide 146 is moulded of low friction plastic material (preferably nylon 101) and has a main body part 160 (through which pins 23x pass) of the correct thickness to provide alignment (especially vertically) at the work stations. On opposite sides of the body 160 are linear bearings 162 which have a leader slope or taper 164 on the leading and trailing corners. Bearings 162 slide in grooves 166 in rails 168. A pair of rails 168 secured to the frame 119 (Figures 9, 19) with the chain 22 supported in between by bearings 162 engagement with the groove 166. The rails are disposed (Figures 1, 22) along the staight runs of the chain, especially on the line past the work stations 12, 14, 16 and on the return run.

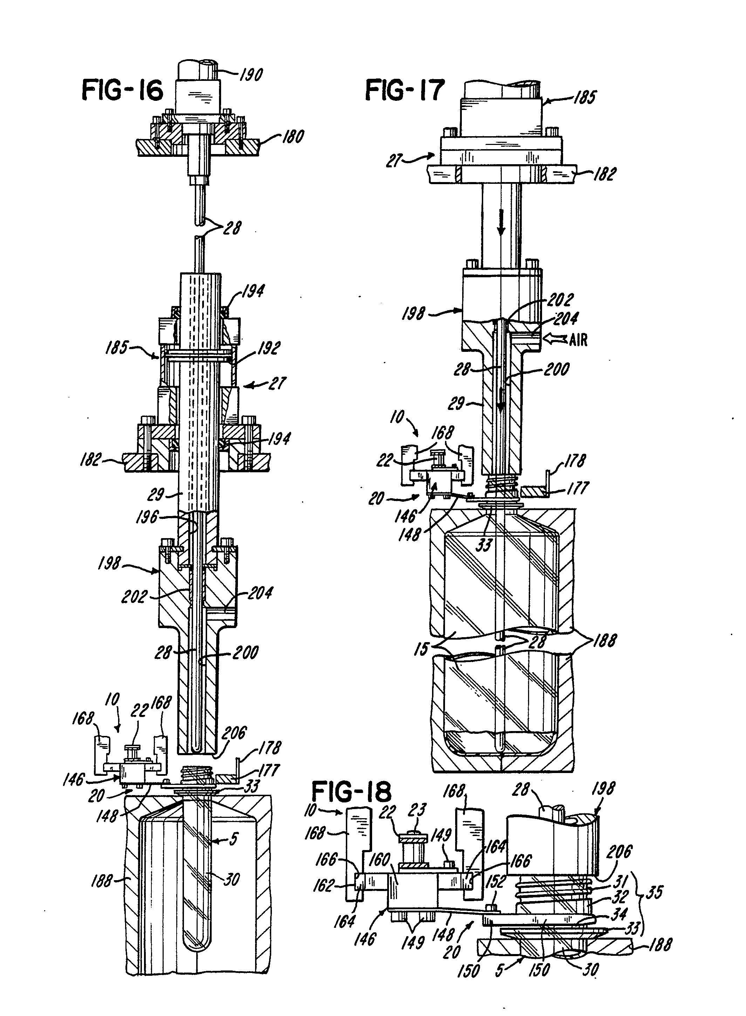

Referring to Figures 1, 2, 18, 22 means are provided to guide, urge, retain the workpiece (preform or bottle) against the curved rear part 154 of the notch of the holder device 150 thus to positively locate at predetermined positions at the work stations. In the illustrated embodiment, preforms 5 are delivered from the oven by the carriage assembly 9 in a group of four along four lanes into a corresponding number and group of holder assemblies 20 at transfer station 12 (Figure 9). A plurality of guide blocks 170 (Figure 22) are supported by brackets 172 mounted on the frame 119 downstream of each lane so that movement of the group of preforms from the station 12 to the station 14 moves them past the guide blocks and guides then keeps all preforms located against the rear part 154 of the holder notch. Each guide has a taper 174 converging in the direction of movement (i.e. from 12 to 14) and a straight section 175 to maintain position. The guide blocks 170 are spaced (see Figure 22) to permit the movement betwen them of the preforms during the transfer from the carriage assembly 9. A continuous blow mould guide rail 177 is supported at the blow station 14 by a bracket 178 to maintain preforms located there for the blowing operation(Figures 16-18).

Preferably the sprockets are of equal size and the side of the chain in tension runs past the work stations 12, 14, 16 which latter are spaced outward from the chain sufficiently to align correctly with preforms in the holder device notches 154, 155. The holder devices in turn are arranged in groups (shown as four) corresponding to the number of blow moulds and spaced within the group the same as such moulds. The groups, rather corresponding holders in successive groups are spaced the amount the chain moves on each iteration, which is usually greater than the spacing between holders in a group.

In blow moulding of plastic bottles, stuffer is the common term for a device to connect a preform to a source of air for blowing. The prior art for an RHB-V used a yoke to raise and lower all the stuffers at once and inserted a male element into the finish 35. The present invention has a face seal to the finish and also has independent movement of the stuffer 27 for each preform with a novel telescoping relation between stuffer rod (and nose mounted on it) and the centre rod 28 where the latter, as an option, is provided.

As shown in Figure 1, the stuffer assembly 16 is mounted at the blow moulding station on a fame having an upper cross piece 180 on which is mounted the centre rod cylinder 190 and a lower cross piece 182 secured to their frame 119 and on which are supported the stuffers cylinders 185 of stuffer cylinder assemblies 27. All of these are vertically aligned to be substantially coaxial with the blow mould 188 associated with each stuffer and centre rod unit.

Both the centre rod cylinder 190 and stuffer cylinder 185 are double acting and preferably are pneumatic rather than hydraulic in order to keep air above the moulds and parts handling the preform. Use of air above, as is well known in the art, reduces or eliminates problems associated with hydraulic oil systems such as leaks, contamination of the products, misting etc.

Each stuffer cylinder assembly 27 has a hollow double ended plunger 29 mounted on the piston 192, each end of plunger 29 protruding from its respective end of the cylinder past an air seal 194. This plunger is hollow, having a bore 196 that is big enough to permit the centre rod 28 to pass completely therethough and to operate in telescoping relation. On the bottom end of the stuffer cylinder assembly is a stuffer nose 198 having a longitudinal bore 200 coaxial with and substantially the same size as the bore 196 through the plunger. A seal 202 to avoid air leaks is provided at the upper end of the nose bore 200 to prevent leakage of compressed air past the centre rod. Air as seen in Figures 16, 17 is brought from a source through a passage 204 in the wall of the stuffer nose into the nose bore.

As the lowermost end of nose 198 is face sealing surface 206 which establishes a face seal with the top of the preform 5. Enough pressure is applied to the upper cylinder to maintain this face seal against the pressure of blow air passing into the hollow part of the preform from the stuffer nose bore.

As shown in Figures 16, 17, 18 when the system is in a blowing mode with air entering through the stuffer nose bore, the leaf spring 148 of holder device 20 is flexed slightly to permit the sealing of the ring 33 against the top of the blow mould. The leaf spring flexes rather than requiring substantial deflection of roller chain 22 which later would be undesirable because it would be in the direction of the pin 23 axes.

At the ejector station 16 is where double acting air cylinder 210 pushes the now blown bottles out of the open end of the notches 154-156 to a location where they can fall away. In the preferred embodiment, a plurality of vertical guides are provided so that the bottle 15 falls away while being maintained in a vertical orientation.

Figures 19-22 illustrates the ejector air cylinder 210 with a pusher bar 212 on the end of its plunger 214. This pusher bar extends in the direction along the roller chain and is long enough to contact all of the now-blown bottles 15 at once during the ejection mould. The pusher bar being so long, one or more guide rods 217 are attached to it and fit in a linear bearing 220 supported on conveyor frame 119.

As best seen in Figure 21, each bottle is pushed out of its holder notch against a fixed vertical guide bar 223 which depends from the frame 119, and being connected thereto by a suitably sized cantilever bracket 224. The face of this bar is coated with a very low friction wearing surface 225 preferably Teflon tape or a coating of a similar material.

Movable guide rods 226 depend vertically from the bottom of the pusher bar, two for each station and engage the bottle body. The movable guide rods do not engage the bottle until about the time pusher bar 212 engages the finish during the ejection function. The pusher bar 212 is shaped to over-reach the top of the bottle (Figures 19, 20) so that it can engage the finish support ring 33 to push the bottle all the way up against fixed guide rod 223 and at the same time bring depending guide rods 226 into engagement with the bottle body as illustrated in Figures 20, 21.

The timing of this cylinder and eject operation is such that bottle 15 begins to descend vertically while engaged between all three of the guide rods 223, 226 and has just about completed its descent when the cylinder 210 retracts the pusher bar 212 and moving guides 226 depending from it.

As mentioned above the purpose of this invention is to receive the preform in the carriage assembly 9 at oven 7, place it in the transport mechanism 10 at transfer station 12 and then to move it through a blow moulding operation at 14 and the eject station 16 where it leaves the machine as a finished product. Operation is understood by following a workpiece (initially a preform) through the machine referring to key machine elements now identified. It is to be understood that preferably a plurality of workpieces, starting as preforms 5, usually four, are processed through the machine simultaneously.

The oven 7 indexes and stops with a preform hanging vertically ready to be discharged. At this point the carriage assembly 9 moves the notches 70, 81 vertically underneath the pending workpiece or preform. The oven assembly by means well known (e.g., the aforesaid patents) discharges the preform vertically down and into the notch where it is received and cause to self-centre by reason of the relative size of notches 70, 81 and the bent trailing edge 69. The rotary actuator 48 now begins to swing its arm 180° to drive the carriage assembly and the preforms therein to transfer station 12. While this motion is taking place, the vertical carriage cylinder 75 is triggered and pushes or extends the vertical carriage assembly 45 from its lowermost position illustrated in Figure 2 to its uppermost position illustrated in Figures 7, 15 (and phantom Figure 2), thus adjusting the height to the correct level for transfer to the transport mechanism 10 at work station 12.

As rotary actuator completes driving the carriage assembly 9 all the way to the left as seen in Figures 2, 7 preform groove 35 is engaged by notches 154-155-156 in the holder device 20 as the carriage assembly moves underneath the transport mechanism 10. Thus, the preforms are literally swept free and clear of the carriage assembly and simultaneously engaged in the notch of the transport mechanism holder.

At this point, vertical carriage cylinder 75 operates again to retract, i.e. to pull carriage notches 154-156 down to the Figure 8 lowermost position thus clearing away from depending portions of the preform and eliminating the probability of catching a preform in the carriage notches - or more correctly in plates 68, 80 or vertical plate 60 when the conveyor actuates to transfer preforms from station 12 to the next work station. With the carriage pulled down to the Figure 8 compressed position, the rotary actuator operates in the opposite direction to return the carriage assembly to the oven discharge station for a repeat of the above events. This operation preferably takes place concurrently with operation of the transport mechanism to transfer the workpiece through the work stations. However, during the return of the carriage to the oven discharge, the fail-safe or abort system is actuated to ensure clearing away any accidentally retained workpieces.

In the embodiment of Figures 2, 7, 8 cam follower 100 hits cam 59 during this return stroke and actuates the four bar linkage to turn bell crank 108 and reciprocate inner plate 80 as in Figures 11, 12, 13. As exemplified in Figure 11, this would clear away any preform accidentally retained.

In the preferred embodiment of Figures 23, 24 fail-safe air cylinder 96 is actuated manually or in response to limit switch or sensor valve actuation to directly move the inner plate 80 back and forth to move the support 81, 83 from any retained preforms and then to reset the same.

The respective fail-safe functions are completed by the time the carriage assembly is returned to the position of Figure 2 where it is again ready to receive the next batch of preforms delivered from the oven 7.

In the meantime, the transport mechanism 10 is actuated by the indexing drive system 120-127 of Figure 1 to move the group of preforms just received at work station 12 to the blow moulding station 14, stopping in a correct and substantially coaxial alignment with the centreline of the stuffer cylinder assembly located at that station. When this operation takes place, each preform 5 that has been located at the blow station 14 has been converted to a bottle 15 (if the blow moulding operation were successful) and the group is moved to the eject station 16. In the meantime, the following group of preform holders 20 is moved into position at the transfer station 12 sliding on supports 162 and preforms guided means 170 where the above operations coordinating with the carriage assembly can be repeated at the correct time and the holder groups ahead of the eject station move on around one interval each.

Once the preform 5 is located at blow station 14, the blow mould(s) 188 is/are closed, the stuffer assembly 27 operates and the stuffer nose 198 engages the preform to create the face seal described in more detail with reference to Figures 18-22 and the system is now ready to blow mould a bottle by introducing air through the stuffer nose bore 200. If centre rods 28 are provided (this is an option not all machines have) the centre rod cylinders 190 are actuated by providing compressed air to drive centre rods 28 down sufficiently fast to follow the preform to the bottom of the blow mould in a manner known in the art.

When the blow moulding operation is completed the centre rods 28 are retracted upwardly into the nose and the nose is, of course, retracted to eliminate the face seal and release compressed air within the now blown bottle 15, returning to the positions approximately illustrated in Figure 1.

While the blow moulding operation is taking place at station 14, an eject operation is taking place at station 16 by applying compressed air to the rear end of the cylinder 210 causing it to move the push bar out against the workpiece now (a bottle finish) and the movable depending guides 226 against the body of bottle 15. This moves the bottles out of the holder notch 154 against the fixed vertical guide bar and the bottles then begin to fall away and continue to do so. The ejector cylinder assembly then resets.

Operation of a system as above on an RHB-V machine successfully blew four two litre bottles about every 2.3 seconds, the so-called cycle time. When dry cycling (i.e. no preforms or blowing) the machine can be speeded up to about 2.1 seconds cycle time. Cycle time when blowing is limited by the blowing and cooling time at the blow station.

Once the blow moulding and eject functions have taken place (and they are both done at the same time on different groups), the blow moulds are opened and the system is now ready to be indexed once more to repeat the foregoing.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A conveyor apparatus for conveying a plurality of preforms (5) from a preform transfer station (12) through a blow station (14) where each preform is received in a blow mould (188) and converted to an expanded hollow product therein, and then to an eject station (16) where such a product is ejected, the apparatus comprising a pair of roller chain sprockets (25, 26) one (25) being a drive sprocket, disposed on vertical shaft axes; a roller chain (22) disposed in a horizontal plane with its pins (23) vertical and about said sprockets (25, 26); a plurality of groups of preform holder assemblies (20) arranged in succession on said chain (22), the preform holder assemblies in each group being spaced the same as the blow moulds (188) are spaced so the preforms may be presented aligned with respective blow moulds; and an intermittent drive means to rotate the drive sprocket (25) periodically an amount sufficient to move the chain an amount to remove an entire group of holder assemblies with products from said blow moulds (188) to the eject station and to replace same with the next succeeding group of holder assemblies.

2. Apparatus according to Claim 1 wherein each holder assembly (20) comprises a resilient member (148) with an inner end and an outer end supported at its inner end from the bottom pin link plate (140) of said chain (22) with the outer end extending outboard of the chain pitch line;and a holder device (150) on the resilient member (148) out end having a notch (154, 155) therein to receive and snugly fit the preform groove (34), such notch being located to dispose the preform in alignment with its respective blow mould (188); and guide means (177) for urging each preform (5) into its holder notch (154, 155) thereby to acquire and keep predetermined location.

3. Apparatus according to one of Claims 1 and 2 wherein said sprockets (25, 26) are of equal size, spaced apart with straight horizontal runs of chain (22) therebetween, located so that said stations (12, 14, 16) are disposed outboard of the pitch line along that straight run which is in tension when driven and with the eject station closest to the drive sprocket (25), and the preform holder assemblies (20) in each group being equally spaced by the amount their respective blow moulds (188) are spaced but corresponding ones in successive groups are spaced by the different and greater amount said chain (22) is periodically moved.

4. Apparatus according to Claim 2 wherein said holder assemblies (20) when at said blow station (14) are each disposed to support a preform (5) when pushed by said guide means (177) fully into said holder notch (154, 155) on the vertical centre of its blow mould (188) with the bottom of its support ring (33) clear of the blow mould top surface, and said resilient member (148) being able to flex vertically enough to permit said support ring bottom (33B)to engage the mould top surface to form a face seal.

5. Apparatus according to any one of the preceding claims further comprising a chain support means (168)for providing vertical and horizontal chain alignment along the straight runs of the chain.

6. Apparatus according to Claim 5 wherein said chain support means (168) comprises first and second pairs of rail carrier guides (168) each pair disposed opposing the other with one of said chain straight runs in between a carrier guide track (166) on each of said guides (168) and likewise disposed;and said chain (22) having a plurality of carrier guides (146) disposed therealong with each extending inboard or outboard of the chain to engage its respective carrier track (166).

7. Apparatus according to Claim 6 wherein each holder assembly (20)further comprises a lug (145) extending horizontally from a selected bottom pin link plate said resilient member (148) being fastened at its inner end underneath and to said carrier guide (146) and by a distance to clear said chain carrier guides (168); the carrier guide (146) of low friction material and being secured to the lug (145) and having opposed linear bearings (162) extending into sliding engagement with one of said guide tracks (166); a pair of extended pins (23X)protruding downwardly through said guide (146) out of the pin holes in the aforesaid bottom pin link plate; and a preform holder (15) supported on the outer end of said resilient member (148) and having on its outer edge a notch (154, 155) as aforesaid.

8. A blow moulding machine comprising a conveyor apparatus (1) to move a heated preform (5) of circular section from an oven (7) to a blow mould (188) where it is blown into a hollow product using a stuffer assembly (16) and to convey such product to an eject station (16) wherein the preform (5) has an unblown finish (35) with a capping ring (33) from which depends a hollow tubular body (30) that is blown to form the product and a groove (34) immediately above said capping ring, the remainder of the finish (35) being above said groove (34), the machine comprising: an oven (7) which discharges downwardly a preform (5) heated preparatory to being blown; a preform transfer station (12), a blow mould station (14), a blow mould (188) at said blow station, and a product eject station disposed linearly along one side of said blow station (14); a reach and take carriage means (9) for receiving the preform (5) downwardly discharged from the oven and moving same to said preform transfer station (12); an endless roller conveyor chain (22) disposed about sprockets (25, 26) in a horizontal plane with the pins (23) vertical and with a straight run extending along one side of said blow mould station (14); a plurality of outward facing preform holder means (20) at a predetermined interval from each other along said chain (22) such that a holder means is at each of said stations (12, 14, 16) at the same time; each holder means having a resilient cantilever member (148) attached to said chain and vertically flexible, a preform holder notch (154, 155) at the outer end of the resilient member (148) and open on the side remote from the chain (22) and shaped to snugly engage said preform groove (34), the notch being located relative to the chain (22) and its movement along said run so as to align with the blow mould (188) at the blow station; said carriage means (9) having an upper plate (68), a capping ring notch (70) in said plate for locating the preforms by its capping ring (33), an inner plate (80) movably supported underneath said upper plate (68), a body notch (81) in said inner plate (80) sized smaller than said capping ring notch (70) and to receive a preform body (30), said capping ring notch and body notch defining a recess with a support surface surrounding said body notch the open side of the notches facing in the same direction as and aligned with said preform holder notch (154, 155), said carriage means a presenting said plates (68, 80) at said transfer station (12) at an elevation such that said groove (34) is engagable by said preform holder notch (154, 155); and drive means (75) to move said carriage means (9) from said oven station to just past where the notches (70, 81, 154, 155) are substantially vertically aligned; whereby the groove (34) is engaged by said preform holder notch (154, 155) and the depending preform body (30) is not within said upper plate capping ring notch and said preform (5) is transferred from the oven (7) to the conveyor (1) aligned for movement to the blow mould (188).

9. A machine according to Claim 8 wherein

(a) all said notches (70, 81, 154, 155) are of U-shape;

(b) preform locating means for said upper plate includes an upwardly bent edge (69) of the plate (68);

(c) means is provided to move said inner plate notch (81) underneath said upper plate (69) hence pushing the preform (5) away from its support;

(d) a periodic drive means is provided to intermittently advance said chain from said transfer station into said blow mould at blow stations; and

(e) a periodic drive means (127) is provided intermittently to advance said chain (22) from said transfer station (12) into said blow mould at said blow station (14), the distance between holders (20) being the amount said chain is advanced.

10. A conveyor apparatus for transferring a plurality of vertically depending parts (5) each such part being of generally cylindrical shape and near its uppermost end having a support ring with superjacent handling notch or groove (34) from a recieving station to a transfer station at a different elevation and clearing itself of any parts accidentally retained when moving between said transfer station and said receiving station and comprising: a horizontal carriage assembly (41) for moving generally horizontally back and forth between said stations; a vertical carriage assembly (65) supported on said horizontal carriage assembly (41) for moving vertically sufficiently to elevate a plurality of said parts (5) from a first level at said receiving station (12) where it receives said parts to a second level of said transfer station where said parts (5) are removed in timed relation to horizontal motion between said respective stations;a support plate assembly (68) mounted at the upper end of said vertical carriage assembly (65) and having a trailing edge (69); a plurality of forward facing notches (70) in said trailing edge (69) each being shaped and sized to admit the part (5) depending portion beneath said ring (32) but not said ring itself; locating means disposed about each said notch to receive, support and locate said capping ring.

11. A conveyor apparatus for conveying an elongate product (5) with its longitudinal axis vertical, comprising an ejector means for removing the product from the conveyor apparatus in a manner to ensure that the product falls substantially in a vertical orientation, the conveyor apparatus comprising a frame, a holder (20) having a U-shaped recess (154, 155) on one side of the holder in which said product (5) is suspended near its upper end, the open side of the recess (154, 155) being sized to allow the product to pass out, characterised in that the ejector means comprises an eject member (212) located underneath said holder and horizontally disposed with said product between itself and the open side of said notch (154, 155); three vertically extending guide members (223, 226), two (226) of which are secured to one of the frame and the eject member (212) and the other guide (223) being mounted on the other side of the product (5) on the other one of said frame and eject member; power means (210) to reciprocate said eject member normally (212) of said conveyor a distance such that the product is pushed horizontally out of the open side of the notch (154, 155) an amount to free it from said holder (20); and said guide members (223, 226) assuming a guiding engagement with the product (5) by the time the product is moved free of said holder (20).

12. A stuffer apparatus for use in the blow moulding of a plastic bottle within a blow mould (188) from a plastic preform (5), the apparatus comprising: a stuffer cylinder (185) having a hollow plunger (29) with a first bore (196) extending completely therethrough; a stuffer nose (198) secured on the end of said hollow plunger (29), having a nose sealing structure (206) for establishing an air tight seal with the finish (35) of the preform, and having a nose bore (200) extending coaxially from said first bore (196) to and through said sealing structure; a long stroke centre rod cylyinder (190) mounted vertically above and coaxial with said stuffer cylinder (185), having a centering plunger (28) having a stroke large enough to move into engagement with the bottom of an object being blown when at the blow mould bottom; and blow air passage means (204) in said nose for conveying blow air through the nose to an exit into the workpiece at said nose sealing structure.

13. A stuffer apparatus for use in blow moulding a plastic bottle within a blow mould (188) from a plastic preform (5), the apparatus comprising a stuffer cylinder (185) having a hollow plunger (29) with a first bore (196) extending completely therethough, a stuffer nose (198) secured to the end of said hollow plunger (29) having a nose sealing structure (206) for establishing an air tight seal with the finish (35) of the preform, and having a nose bore (200) extending co-axially from said first bore (196) to and through said sealing structure (206), and blow air passage means (204) in said nose (198) fo conveying blow air through the nose to and exit into the workpiece at said nose sealing structure.

14. A stuffer apparatus for a blow moulding machine comprising: a plurality of double acting long stroke fluid cylinders (190) which in use will be supported on an uppermost part of the machine each with its plunger (28) substantially vertical and coaxial with the axis of the workpiece to be blown; a corresponding plurality of double acting short stroke stuffer cylinders (27) each being supported and located below a corresponding one of said long stroke cylinders (190) for a vertical stroke, each having a hollow plunger (29) with a centre rod bore (196) extending completely therethough and which receives a corresponding one of said plungers (28) in the hollow portion thereof; a stuffer nose (198) on the lower end of each of said plungers (29) with a generally central bore (200) aligned with its corresponding centre rod bore (196); a seal surface (206) on the lower end of said stuffer nose (198) for sealing engaging a preform (5) during blowing, said stuffer nose bore (200) passing through said seal surface (206) for communication with the interior of the preform; said stuffer nose bore having an enlarged lower end; an inlet air passage (204) through an intermediate part of said stuffer nose (198) into said enlarged bore lower end; said plunger (28) extending in telescoping manner through said stuffer cylinder (27) and its centre rod bore (196) and through said stuffer nose and its central bore (198) and the enlarged lower end having a stroke sufficient to move is lower end to the bottom of a workpiece when in the blow mould; and a seal (202) between the plunger (28) and said central bore (200) above said inlet air passage (204).

15. A conveyor apparatus for conveying a plurality of blow moulding preforms (5), each of which is engaged at a groove (34) between capping and support rings (32, 33) on the upper end, from a preform receiving or loading station to a transfer station (12) and thence through at least one additional work station (14, 16), the apparatus comprising a reach and take assembly (9) having: a carriage assembly (41) mounted for motion on a first path; power means (48) to move said carriage assembly (41) back and forth along said first path between said loading station and said transfer station; a support assembly having a first support plate (68) and a second support plate (80) said first plate (68) having a trailing edge (69)that extends laterally of said path at the upper side of said carriage assembly (41) said second plate (80) being movably supported underneath said first plate (68) to reciprocate in said first path direction; support recesses (70) in the trailing edge (69) of the first plate (68) which correspond in number to the quantity of preforms to be transferred in one cycle of operation and shaped to snugly receive and locate said support ring (33), and smaller corresponding recesss (81) in said second plate (80) to provide support to the preform body underneath said preform support ring.

16. A conveyor apparatus for conveying at least one workpiece (5) each of which is engaged at an indentation between upper (32) and lower (33) flanges or the like on the upper end portion from a workpiece receiving or loading station (12) to a transfer station (14, 16) and thence through at least one additional work station comprising a reach and take assembly (9) having a carriage assembly (41) mounted for motion on a first path; power means (48) to move said carriage assembly means (41) back and forth along said first path between said loading station and said transfer station; a support assembly comprising a first fixed plate (68) and a second movable plate (80) underneath said first plate, the first plate (68) having a trailing edge (69) which extends laterally of said path at the upper side of said carriage assembly (41) and a support recess (70) in the trailing edge (69) of the first plate which is shaped to snugly receive and conform to the lower flange (33) of the workpiece (5) and a corresponding smaller support recess (81) in said second plate (80) that provide a shoulder around the bottom of the recess (70) of the first plate to support said lower flange (33) from underneath; and a transport mechanism comprising an endless conveyor member (22); drive and idler means (25, 26) supporting said conveyor member (22) and providing a second path of movement including a linear run in tension when driven between said transfer station (12) and the work station (14) downstream therefrom; an indexing drive means (120) to periodically move said drive means (25) hence said conveyor member (22) a predetermined amount on each cycle and holder means (20) supported outwardly from said endless conveyor member (22) and presenting a recess (154, 155) aligned with the recess (70) of the carriage assembly (41) but superjacent thereto by an amount sufficient to receive the workpiece (5) when said carriage assembly (41) is moved beneath the transport mechanism by said power means (48).

FIG-1

FIG-3

FIG-4

FIG-5

FIG-6

FIG-2

0 248 376

FIG-7

FIG-8

FIG-9

FIG-10

FIG-11

FIG-12

FIG-13

FIG-14

FIG-15

**FIG-16**

**FIG-17**

**FIG-18**

FIG-19

FIG-20

FIG-21

FIG-22

EJECT 16

BLOW 14

TRANSFER 12

0 248 376

FIG-24

FIG-23